# EUROPÄISCHE PATENTSCHRIFT

(11) **EP 0 562 499 B1**
(45) Veröffentlichungstag und Bekanntmachung des Hinweises auf die Patenterteilung: **29.05.1996**
(21) Anmeldenummer: 93104596.7
(22) Anmeldetag: 20.03.1993
(51) Int. Cl.: H02G 3/04

(54) **Kabelkanalprofil**
Cable ducting section
Profilé pour canalisation de câbles

(30) Priorität: 24.03.1992 DE 4209499
(43) Veröffentlichungstag der Anmeldung: 29.09.1993
(73) Patentinhaber: del Vesco, Heinz, D-53881 Euskirchen (DE); Miranda, Giovanni, D-78549 Spaichingen (DE)
(72) Erfinder: Giovanni, Miranda, W-7208 Spaichingen (DE)
(74) Vertreter: Patentanwälte Westphal, Buchner, Mussgnug Neunert, Göhring

(56) Entgegenhaltungen:
- EP-A- 0 200 927
- EP-A- 0 389 382
- WO-A-80/02476

## Beschreibung

Die Erfindung betrifft ein Kabelkanalprofil gemäß Oberbegriff des Anspruchs 1.

Ein derartiges Kabelkanalprofil ist beispielsweise aus der EP 0 200 927 A2 bekannt. Derartige Kabelkanalprofile werden bei der Verlegung von Installationsleitungen eingesetzt. Hierbei wird zunächst ein im wesentlichen U-förmiger Grundkörper an der Stelle des vorgesehenen Leitungsverlaufs an der Wand angebracht und nach dem Einlegen der Installationsleitung mit einem Deckel verschlossen. Lösbare Verbindungselemente in Form von Rastorganen ermöglichen den einfachen Aus- und Einbau von Deckel und Seitenwandelementen, so daß deren Austausch möglich ist, ohne das Bodenelement von seiner Verankerung an der Wand lösen zu müssen.

Dies erlaubt auf einfache Art und Weise die Änderung des Kabelkanals, wie sie z. B. bei Erweiterungen oder Ergänzungen der Installation erforderlich ist. So kann der Kanalquerschnitt auf einfache Weise dadurch vergrößert werden, daß anstelle der ursprünglichen Seitenwandelemente solche mit größerer Höhe verwendet werden. Auch ist der Ausbau auf Kanäle mit getrennten Querschnittsverläufen möglich.

Schließlich kann auch Designwünschen dadurch Rechnung getragen werden, daß einzelne Elemente mit geänderter Farbstellung oder geändertem Material eingesetzt werden können.

Nachteilig an diesem Kabelkanalprofil ist jedoch, daß seine Einzelteile erst am Einbauort zusammengefügt werden können. Die geforderte Zuordnung der Einzelteile bringt die Gefahr von Verwechslungen mit sich. Ein weiterer Nachteil besteht darin, daß beim Öffnen des Kabelkanals zu Inspektions- oder Reparaturzwecken die Gefahr besteht, daß die abgenommenen Teile verlorengehen oder daß beim Abnehmen eines Elements weitere Elemente versehentlich aus der Verankerung gelöst werden.

Ein vergleichbares Kabelkanalprofil ist auch aus der EP 0 389 382 A1 bekanntgeworden. Durch standardisierte Grundelemente ist es möglich, ein Kabelkanalprofil mit relativ komplexer Querschnittsgeometrie aufzubauen. Die einzelnen Wandelemente können lösbar miteinander verbunden werden.

Auch hier besteht die Gefahr, daß beim Öffnen abgenommene Teile verlorengehen oder weitere Elemente versehentlich aus der Verankerung gelöst werden

Andererseits sind Kabelkanalprofile bekannt, welche komplett, d. h. Grundkörper einschließlich Deckel einstückig gefertigt sind. Ein derartiges Kabelkanalprofil ist beispielsweise in der EP 0 027 814 B1 beschrieben, welches in Form eines faltbaren Bandes vorgefertigt werden kann. Die einzelnen Elemente, d. h. sowohl die den Grundkörper bildenden Seitenwandelemente und das Bodenelement als auch der Deckel sind miteinander über sogenannte Filmscharniere verbunden. Im geöffneten Zustand liegt das Kabelkanalprofil als Band vor und kann komplett an den Installationsort verbracht werden. Dort wird das Band an dem das Bodenelement darstellenden Segment an der Wand befestigt und das eigentliche Profil durch Falten der Seitenwandelemente und des Deckels an den Filmscharnierstellen in die endgültige Form gebracht und verrastet. Der Nachteil dieses Kabelkanalprofils besteht darin, daß es keine nachträglichen Änderungen hinsichtlich seines Querschnitts durch Austausch einzelner Seitenwandelemente zuläßt. Des weiteren ist eine Installation bei Temperaturen in der Nähe des Gefrierpunktes oder darunter nicht mehr möglich, da das die Filmscharniere bildende Material bei diesen Temperaturen versprödet und die Elemente beim Falten abbrechen.

Aufgabe der vorliegenden Erfindung ist es, ein Kabelkanalprofil der eingangs beschriebenen Art zur Verfügung zu stellen, das die beschriebenen Nachteile nicht mehr aufweist. Insbesondere soll das Kabelkanalprofil, zumindest hinsichtlich seines U-förmigen Grundkörpers, im vorgefertigten Zustand zum Installationsort transportiert werden können. Dort soll nach Anbringung des Bodenelements auf einfache Weise nach Art eines Faltvorgangs die Endmontage erfolgen. Weiterhin soll ein Kabelkanalprofil zur Verfügung gestellt werden, welches nach seiner Installation jederzeit geöffnet werden kann, ohne daß die Gefahr besteht, daß einzelne Elemente unbeabsichtigt aus ihrer Verbindung gelöst werden.

Die Aufgabe wird erfindungsgemäß mit einem gattungsgemäßen Kabelkanalprofil gelöst, das die Merkmale des Kennzeichens des Anspruchs 1 aufweist.

Bevorzugte Ausgestaltungen des erfindungsgemäßen Kabelkanalprofils sind den Merkmalen der Unteransprüche zu entnehmen.

Die Erfindung geht von der Idee aus, die einzelnen Elemente des Kabelkanalprofils mit aufeinander abgestimmten Rastorganen auszustatten, so daß sich eine Verbindung nach Art eines Scharniers ergibt. Die den jeweiligen Elementen zugeordneten Scharnierteile sind so aufeinander abgestimmt, daß sie innerhalb eines vorgegebenen Schwenkbereichs, z. B. in der Größenordnung von etwa 90°, lose miteinander verbunden sind, wobei die Verbindung durch einfaches Ausklinken des betreffenden Elements gelöst werden kann. Andererseits können die zu verbindenden Elemente in einer vorgegebenen Endposition des Schwenkbereichs verrastet und in dieser Stellung fest miteinander verspannt werden. Dies ermöglicht eine einfache Vormontage zumindest des U-förmigen Grundkörpers des Kabelkanalprofils durch einfaches Zusammenklipsen des Bodenelements mit den Seitenwandelementen. Durch die Verschwenkbarkeit der Elemente ist es möglich, das Kabelkanalprofil im aufgeklappten und damit flachen Zustand vom Ort der Montage zum Installationsort zu transportieren. Im aufgeklappten Zustand benötigt das Kabelkanalprofil lediglich einen geringen Platzbedarf, so daß sich die gesamte Logistik von der Vormontage über Lagerhalterung und Transport bis zum Installationsort äußerst kostengünstig gestalten läßt.

Am Installationsort läßt sich das vorgefertigte Kabelkanalprofil auf einfache Weise an der Wand befestigen, da im aufgeklappten Zustand das Bodenelement frei zugänglich und damit bequem mit der Wand verbunden werden kann. Auch kann kurzfristig die Verbindung zu den Seitenwandelementen gelöst werden, wenn zunächst das Bodenelement alleine vormontiert werden soll.

Ein installiertes Kabelkanalprofil läßt sich auf ebenso einfache Weise öffnen, auch lassen sich einzelne Elemente entfernen bzw. austauschen, ohne daß das Bodenelement von der Verankerung gelöst werden muß. Insbesondere bei erforderlichen Erweiterungen oder Ergänzungen lassen sich Seitenwandelemente durch solche anderer Dimensionierung oder auch anderer Gestaltung auf einfache Art und Weise austauschen. Auch kann geänderten Anforderungen hinsichtlich Aussehen und Materialbeschaffenheit im nachhinein Rechnung getragen werden. Häufig besteht der Wunsch, die Farbstellung eines Kabelkanalprofils zu verändern oder die weit verbreitete Kunststoffausführung durch eine solche aus Metall, vorzugsweise Aluminium, zu ersetzen. Dies gelingt mit dem erfindungsgemäßen Kabelkanalprofil äußerst kostengünstig.

Eine erweiterte Variablität ergibt sich dadurch, daß Seitenwandelemente mit beiderseits angebrachten Rastorganen vorgesehen sind. Hierdurch kann unter Beibehaltung der übrigen Kabelkanalprofilelemente ein weiterer, in sich abgeschlossener Kabelkanal durch einfaches Anbauen an vorhandene Systeme installiert werden. Derartige Konstellationen sind dort anzutreffen, wo zusätzlich zu Stromversorgungsinstallationen eine Telekommunikationsleitung oder ein Computernetzwerk installiert werden soll. In solchen Fällen ist es nicht möglich, beide Leitungssysteme in einem Kabelkanalprofil gemeinsam zu verlegen, vielmehr sind hierfür Trennwände bzw. in sich geschlossene, separate Kabelkanalprofile erforderlich.

Aus fertigungstechnischen Gründen erstrecken sich die Rastorgane einschließlich ihrer Funktionselemente über die gesamte Länge des Kabelkanalprofils, jedoch ist es nicht ausgeschlossen, Rastorgane lediglich abschnittsweise oder als Einzelscharnierelemente vorzusehen.

Eine günstige Herstellmöglichkeit des Kabelkanalprofils besteht im Spritzgießen der einzelnen Elemente. Hierbei wird ein kontinuierliches Endlosprofil erzeugt, das entweder zu einem Coil aufgewickelt oder auf ein bestimmtes Maß abgelängt wird. Ebenso ist es möglich, Profilabschnitte vorgegebener Länge zu spritzen.

Häufig besteht auch der Wunsch, Kabelkanalprofile aus metallischen Werkstoffen zu fertigen. Nach einer bevorzugten Ausführungsform werden sämtliche Elemente einschließlich der Rastorgane durch spanlose Formgebung aus Blech geformt. Dies kann auch in einem kontinuierlichen Verfahren geschehen, so daß sich eine kostengünstige Herstellung realisieren läßt. Hierbei werden die Rastorgane durch ein geeignetes Profilierverfahren, wie beispielsweise durch Rollbiegen, einstückig endseitig am jeweils zugehörigen Wand-, Boden- oder Deckelelement angeformt. Die Rastorgane erhalten deshalb jeweils die Grundform einer Schale, wobei eingebrachte Sicken und Vorsprünge die Rast- bzw. Anschlagorgane bilden.

Das erfindungsgemäße Kabelkanalprofil wird näher anhand der nachstehenden Figuren erläutert. Es zeigen:
- Fig. 1: das Kabelkanalprofil im arretierten Zustand,
- Fig. 2: einen Ausschnitt des Kabelkanalprofils in vergrößerter Darstellung zur Erläuterung von Konstruktion und Funktion der Rastorgane,
- Fig. 3: das Kabelkanalprofil in einer ersten Ausführungsvariante mit zwei separaten Kanalverläufen,
- Fig. 4: das Kabelkanalprofil in einer zweiten Ausführungsvariante mit abweichend gestalteten Rastelementen,
- Fig. 5: einen Ausschnitt des Kabelkanalprofils in vergrößerter Darstellung mit Rastorganen gem. einer dritten Ausführungsvariante,
- Fig. 6: einen Ausschnitt des Kabelkanalprofils in vergrößerter Darstellung mit Rastorganen gem. einer vierten Ausführungsvariante,
- Fig. 7: einen Ausschnitt des Kabelkanalprofils in vergrößerter Darstellung mit Rastorganen gem. einer fünften Ausführungsvariante,
- Fig. 8: das Kabelkanalprofil in einer sechsten Ausführungsvariante, aus Stahlblech,
- Fig. 9: das Kabelkanalprofil aus Fig. 8 mit Deckelelement und
- Fig. 10: einen Ausschnitt des Kabelkanalprofils gem. Fig. 8 und 9 in vergrößerter Darstellung zur Erläuterung von Konstruktion und Funktion der Rastorgane.

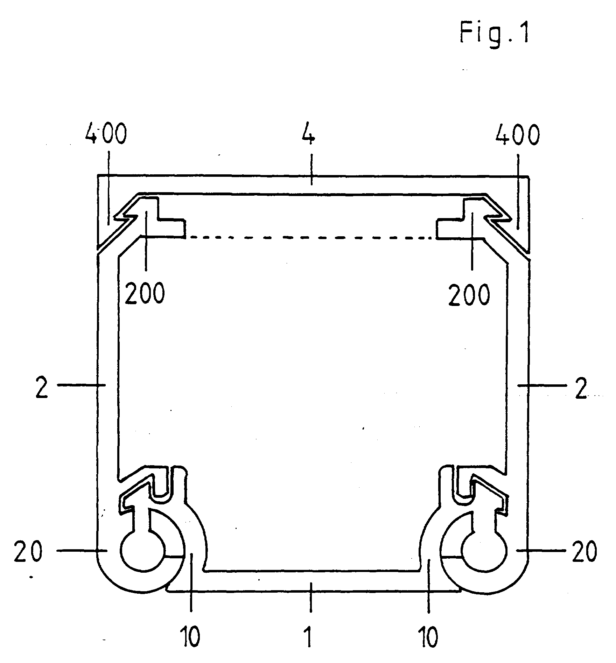

Wie sich beispielsweise aus Fig. 1 ergibt, besitzt das Kabelkanalprofil einen im wesentlichen U-förmigen Grundkörper, der aus einem Bodenelement 1 und zwei Seitenwandelementen 2 besteht. Der U-förmige Grundkörper wird mit einem Deckel 4 verschlossen.

Das Bodenelement 1 weist zwei Rastorgane 10 auf, die mit entsprechenden Rastorganen 20 der Seitenwandelemente 2 zusammenwirken und in der gemäß Figur 1 dargestellten Position die Elemente zusammenhalten und miteinander verspannen.

Die Seitenwandelemente 2 weisen deckelseitig weitere Rastorgane 200 auf, die mit entsprechend ausgeformten Rastorganen 400 des Deckels 4 zusammenwirken und diesen auf dem U-förmigen Grundkörper fixiert festhalten.

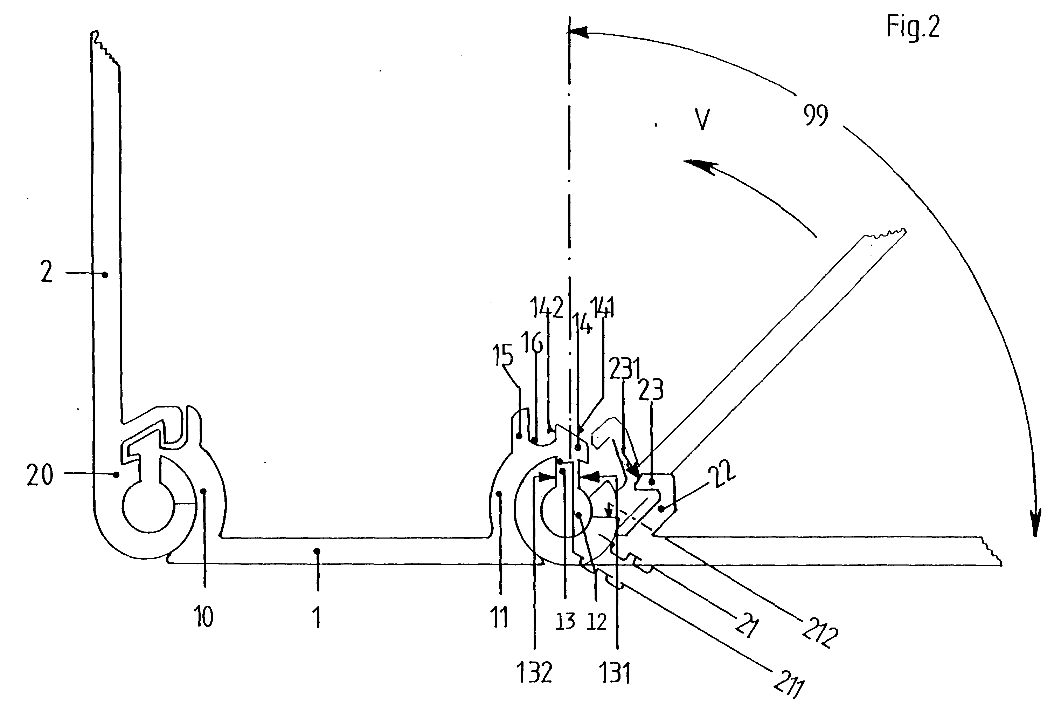

In der Darstellung gemäß Figur 2 weist das Bodenelement die beiden Rastorgane 10 auf. Diese sind hinsichtlich ihrer Gestaltung spiegelsymmetrisch in bezug auf die Mittellinie des Bodenelements 1 angeordnet, im übrigen jedoch deckungsgleich ausgeführt.

Das in der Figur 2 links angebrachte Seitenwandelement 2 befindet sich in der endgültigen Position und ist mit dem Bodenelement 1 verrastet.

Das in der Figur 2 rechts dargestellte Seitenwandelement 2 befindet sich in der aufgeklappten Position, wobei noch zusätzlich eine Zwischenstellung des Seitenwandelements 2 angedeutet ist.

Die Rastorgane 10 des Bodenelements 1 weisen einen Lagerzapfen 12 auf, der über einen Trägersteg 13 mit einer Lagerschale 11 verbunden ist. Die Zuordnung und die Gestaltung dieser Teile ist so gewählt, daß zwischen dem Lagerzapfen 12 und der Lagerschale 11 ein Zwischenraum entsteht, der die Form eines Hohlzylindersegments aufweist. Die Lagerschale 11 ist um den Lagerzapfen 12 im Abstand so weit herumgeführt, daß sich eine Überdeckung von knapp 180° ergibt.

Das Rastorgan 10 besitzt eine Rastnase 14, die an der Trägerschale 11 in Verlängerung des Trägerstegs 13 angebracht ist. Sie besteht im wesentlichen aus einer Gleitrampe 141 sowie einem im spitzen Winkel dazu verlaufenden Arretiersteg 142.

Vorteilhafterweise weist das Rastorgan einen Widerlagersteg 15 auf, der sich ebenfalls außen aus der Lagerschale 11 erhebt. Er ist so plaziert, daß er zusammen mit dem Arretiersteg 142 der Rastnase 14 eine Rastnut 16 bildet.

Auf diese Konfiguration abgestimmt ist das Rastorgan 20 des Seitenwandelements 2. Es besteht im wesentlichen aus einem Lagersegment 21 und einem Rasthaken 22, der in einem Arretierschenkel 23 endet.

Das Lagersegment 21 hat die Form eines Hohlzylindersegments, das einen Winkelsektor von etwas weniger als 270° überstreicht. Es ist zum Eingriff in den Zwischenraum zwischen den Lagerzapfen 12 und der Lagerschale 11 des Rastorgans 10 vorgesehen. Er muß in seiner radialen Ausdehnung deshalb so bemessen sein, daß er mit etwas Spiel in dem Zwischenraum aufgenommen werden kann. Das Zusammenwirken dieser Teile ermöglicht die Funktion eines Scharniers, wobei die gegenseitige Überdeckung und die Dimensionierung so gewählt sind, daß unter Ausnutzung der elastischen Deformation der ineinandergreifenden Teile eine Lösbarkeit der Verbindung realisiert ist.

Der Schwenkbereich 99, der vom Seitenwandelement 2 in bezug auf das Bodenelement 1 überstrichen werden kann, wird vorteilhafterweise durch Anschlagflächen im Bereich der Rastorgane begrenzt. Im aufgeklappten Zustand wird der Schwenkbereich 99 begrenzt durch das Anlegen der radialen Begrenzungsfläche 211 des Lagersegments 21 an die Seitenfläche 131 des Trägerstegs 13. Die verrastete Position kann primär durch das Anlegen der radialen Begrenzungsfläche 212 des Lagersegments 21 an der gegenüberliegenden Seitenfläche 132 des Trägerstegs 13 festgelegt sein.

Das Verrasten des Seitenwandelements 2 mit dem Bodenelement 1 erfolgt in der Weise, daß beim Hochschwenken des Seitenwandelements 2 in Richtung des Pfeiles V bei Annährung an die Endposition der Arretierschenkel 23 mit seiner Nockenfläche 231 an der Gleitrampe 141 der Rastnase 14 zunächst zur Anlage kommt und beim weiteren Verschwenken auf der Gleitrampe 141 gleitet. Hierbei werden Arretierschenkel 23 und Rasthaken 22 elastisch in Richtung auf das Seitenwandelement 2 verbogen, bis die Nockenfläche 231 das Ende der Gleitrampe 141 erreicht, der Rasthaken 22 mit dem Arretierschenkel 23 zurückfedern kann und der Arretierschenkel 23 zur Anlage an den Arretiersteg 142 der Rastnase 14 kommt.

Für den Fall, daß ein Widerlagersteg 15 zur Bildung der Rastnut 16 vorgesehen ist, wird der Arretierschenkel 23 weitgehend in der Rastnut 16 umfaßt. Somit ist die in Figur 2 auf der linken Seite dargestellte Relativlage der Rastorgane 10 und 20 zueinander erreicht. Allerdings ist in Abweichung zu der dortigen Darstellung ein weitgehender Formschluß der beiden Rastorgane 10, 20 zumindest im Bereich der Arretierschenkel 23 bzw. der Rastnase 14 gegeben. Dies gilt auch für die entsprechende Darstellung in den beiden anderen Figuren, die allenthalben eingezeichneten Lücken und Spalten dienen lediglich der Veranschaulichung des Funktionsprinzips.

Zum Öffnen der Arretierung ist es erforderlich, den Arretierschenkel 23 aus dem Bereich des Arretierstegs 142 herauszuheben. Dies kann auf vorteilhafte Weise dadurch geschehen, daß mit einem geeigneten Gegenstand, wie beispielsweise einem Schraubendreher, der Arretierschenkel 23 im Bereich seiner Nockenfläche 231 unterfaßt und über die Kante des Arretierstegs 142 hinweggehebelt wird. Zur Unterstützung dieses Vorgangs hat sich der Widerlagersteg 15 als besonders vorteilhaft erwiesen, da dieser eine geeignete Auflagefläche für den Gegenstand, der das Öffnen bewirken soll, bietet.

In der Darstellung gemäß Figur 1 ist der Deckel 4 an den beiden Seitenwandelementen mittels üblicher Rastorgane 200, 400 verbunden. Gewünschtenfalls kann auch eine der beiden Verbindungsstellen mit Rastorganen 10, 20 versehen sein, so daß auch der Deckel 4, ebenso wie das Seitenwandelement 2 verschwenkbar gelagert und verrastend arretierbar ist. Auf diese Weise ist es möglich, das komplette Kabelkanalprofil, und somit nicht nur dessen U-förmiger Grundkörper, als komplette Einheit vormontiert vorliegen zu haben.

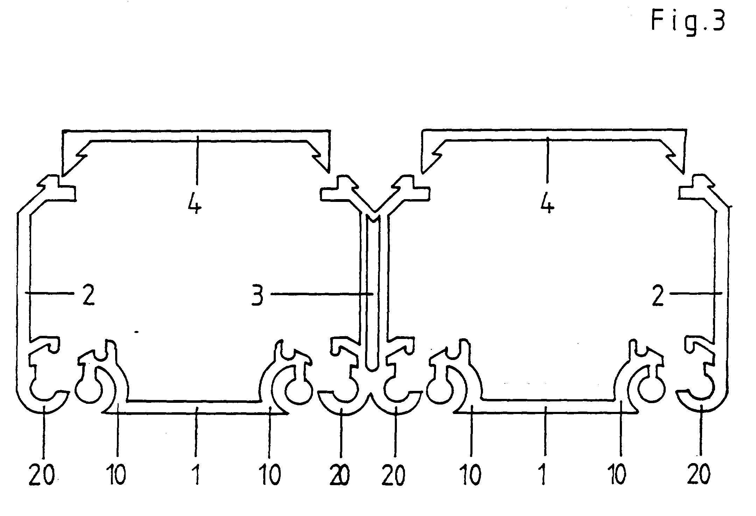

In Figur 3 ist eine Variante des Kabelkanalprofils dargestellt, bei dem ein Seitenwandelement 2 durch das Trennwandelement 3 ersetzt ist.

Das Trennwandelement 3 besitzt in symmetrischer Anordnung zwei Rastorgane 20, die jeweils für sich genommen zur Aufnahme eines entsprechenden Rastorgans 10 und damit eines Bodenelements 1 vorgesehen sind. Hierdurch ist es möglich, nach Art eines Baukastensystems eine Vielzahl von in sich abgeschlossenen Kabelkanälen aufzubauen. Durch die Verwendung der identisch aufgebauten Rastorgane 10, 20 ist die erforderliche Zahl unterschiedlicher Teile gering zu halten.

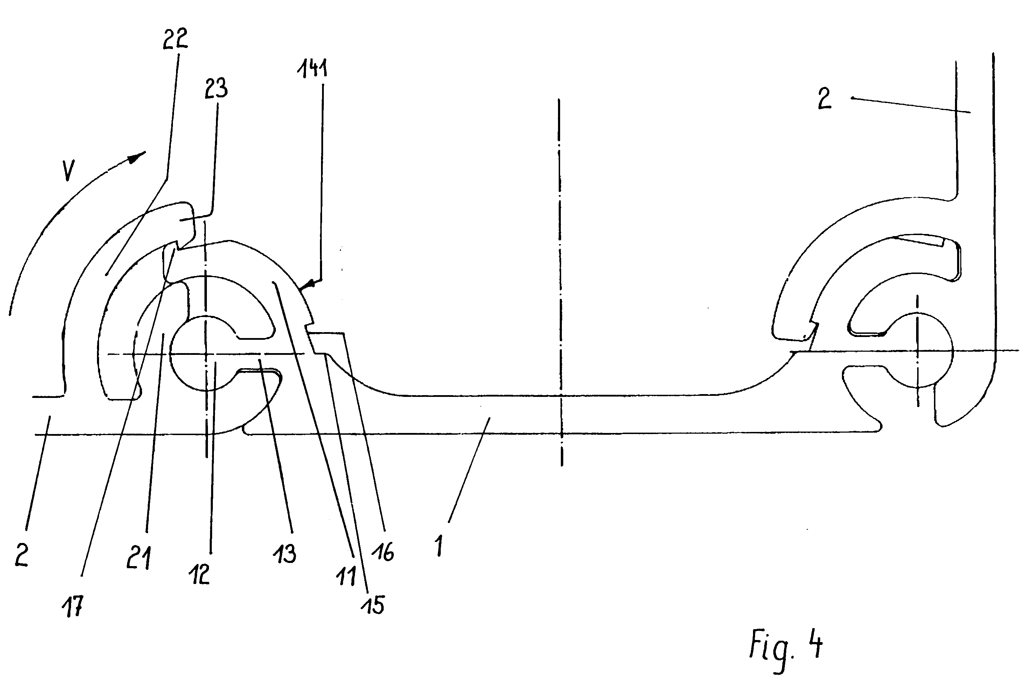

In Figur 4 ist der Ausschnitt eines Kabelkanalprofils dargestellt, das etwas abweichend gestaltete Rastorgane 10, 20 aufweist. Hierbei wird der Lagerzapfen 12 durch einen im wesentlichen horizontal und oberhalb der Grundfläche des Bodenelements 1 verlaufenden Trägersteg 13 gehalten. Die Lagerschale 11 erstreckt sich oberhalb des Trägerstegs 13 und überstreicht hierbei einen Winkel von etwas mehr als 90°, bevorzugt 100° bis 110°. Somit entsteht zwischen dem Lagerzapfen 12 und der Lagerschale 11 ein Hohlraum, in welchen ein Lagersegment 21 des Seitenwandelements 2 eingreift. Unterhalb des Trägerstegs 13 ist in das Bodenelement 1 eine weitere Ausnehmung eingearbeitet, so daß ein weiterer Hohlraum entsteht, in welchen das auslaufende Ende des Seitenwandelements 2 als Fortsetzung des Lagersegments 21 eingreift. Somit wird der Lagerzapfen 12 um etwas mehr als 180° vom Lagersegment 21 des Seitenwandelements 2 umfaßt, so daß auch in diesem Fall eine unverlierbare Befestigung des Seitenwandelements 2 am Bodenelement 1 gewährleistet ist.

Konzentrisch zum Lagersegment 21 ist ein Rasthaken 22 am Seitenwandelement 2 angeformt, dessen endseitiger Arretierschenkel 23 außen an der Lagerschale 21 entlanggleitet. Dieser Bereich der Lagerschale 11 stellt somit eine Gleitrampe 141 dar. Am Ende der Gleitrampe 141 ist eine Rastnut 16 außen in die Lagerschale 11 eingebracht, in welche der Arretierschenkel 23 des Seitenwandelements 2 eingreifen und verrasten kann. Die untere Flanke der Rastnut 16 dient dabei als Widerlager 15 für den Arretierschenkel 23.

Zur Begrenzung des Öffnungswinkels ist am freien Ende der Lagerschale 11 ein Steg 17 angeformt, an welchem ein korrespondierender Steg des Arretierschenkels 23 zur Anlage gebracht werden kann.

Bei dieser Ausführungsvariante des Rastorgans wird eine zusätzliche Stabilität dadurch erreicht, daß zwischen dem Lagersegment 21 und dem Rasthaken 22 ein weiterer Hohlraum entsteht, in welchem die Lagerschale 11 des Bodenelements 1 zusätzlich geführt ist.

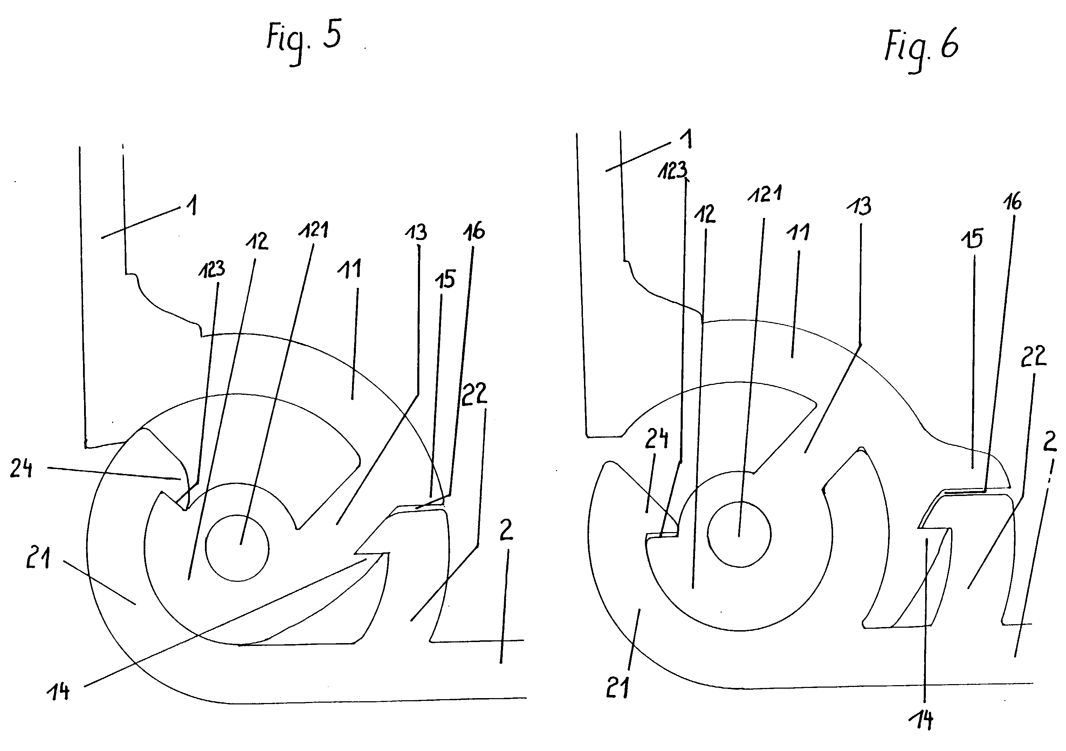

Die Rastorgane gem. Fig. 5 und 6 sind ähnlich aufgebaut. Sie zeigen eine Vertikalanbringung des Bodenelements 1, wie sie beispielsweise dann gewählt wird, wenn das Kabelkanalprofil an einer Wand anzubringen ist. In beiden Fällen ist ein Lagerzapfen 12 dargestellt, der eine koaxiale Ausnehmung 121 nach Art einer Bohrung aufweist. Diese dient im wesentlichen der Material- und damit der Gewichtseinsparung. Der Lagerzapfen 12 besitzt einen Begrenzungssteg 123, der mit einem endseitig an einem Lagersegment 21 angebrachten Anschlag 24 zusammenwirkt.

Bei der Ausführungsvariante gem. Fig. 5 wird das Seitenwandelement 2 dadurch verrastet, daß ein Rasthaken 22 in eine Rastnut 16 eingreift, die an einem Trägersteg 13 angebracht ist, wobei der Trägersteg 13 wiederum den Lagerzapfen 12 mit der Lagerschale 11 des Bodenelements 1 verbindet.

In der Ausführungsvariante gem. Fig. 6 greift ein Rasthaken in eine Rastnut 16 ein, die an einer Lagerschale 11 angebracht ist.

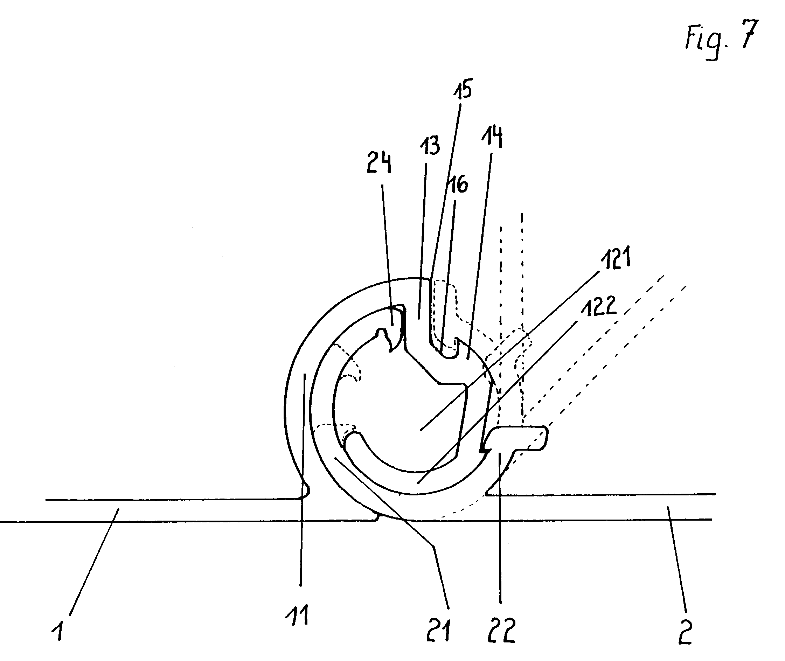

Die Ausführungsvariante gem. Fig. 7 weist keinen Lagerzapfen im herkömmlichen Sinne auf, vielmehr ist ein Schalensegment 122 vorgesehen, das über einen Trägersteg 13 mit einer Lagerschale 11 des Bodenelements 1 verbunden ist. Gegenüber dem oben beschriebenen Lagerzapfen 12 ermöglicht dies eine weitere Einsparung an Material. Der Übergang von der Lagerschale 11 zum Schalensegment 122 erfolgt in Form des mehrfach abgewinkelt verlaufenden Trägerstegs 13, der somit die integrale Ausbildung einer Rastnut 16 und einer Rastnase 14 ermöglicht. Auf seiner Außenfläche gleitet ein Rasthaken 22 eines Seitenwandelements 2 entlang, der dazu bestimmt ist, in die Rastnut 16 einzugreifen. Das Seitenwandelement 2 geht endseitig in ein Lagersegment 21 über, an dessen Ende ein Anschlag 24 angeformt ist. Dieser begrenzt den Schwenkwinkel durch Anliegen am Schalensegment 122.

Diese Ausführungsvariante ermöglicht eine optimale Materialausnutzung, da lediglich schalenartige Scharnierelemente mit relativ kleinen Querschnitten verwendet werden.

Die vorstehend beschriebenen Ausführungsformen eigenen sich insbesondere für Kabelkanalprofile, die durch Spritzgießen von Kunststoffen gefertigt werden. Durch das Spritzgießverfahren ist es möglich, beliebige Querschnittsformen zu realisieren. In vielen Anwendungsfällen ist jedoch die Verwendung von Kunststoff ungünstig. So besteht vielfach der Wunsch, das Kabelkanalprofil gleichzeitig als Abschirmung für die darin zu verlegenden Leitungen zu verwenden. Dies macht es erforderlich, ein allseits geschlossenes Metallprofil zu realisieren.

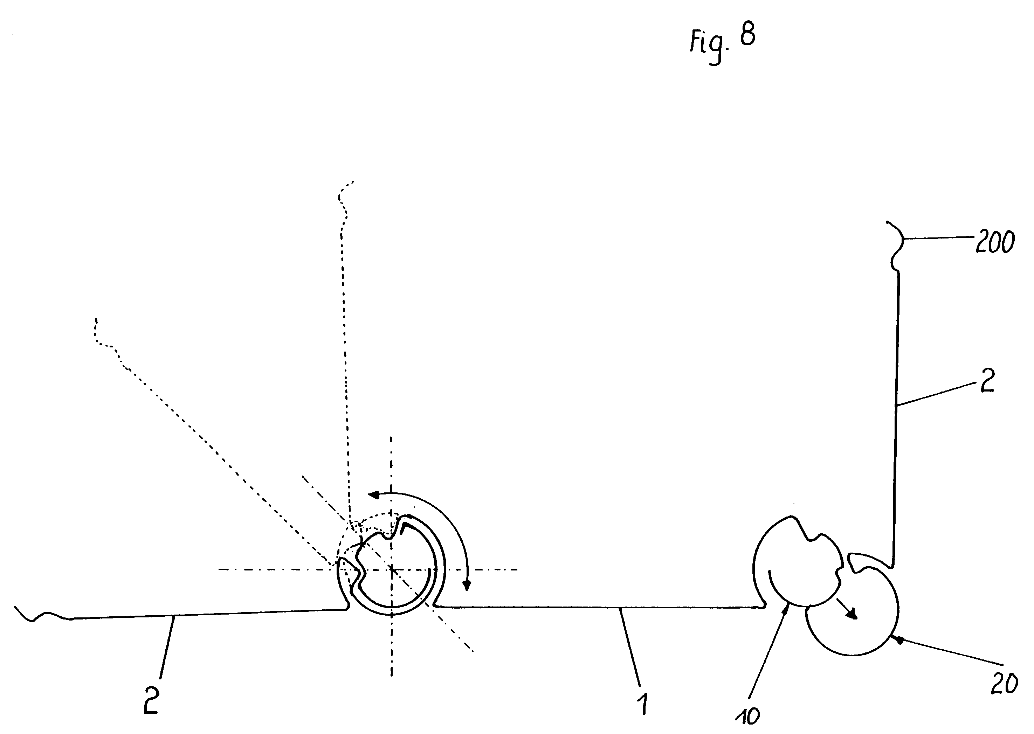

Mit der in den Figuren 8 bis 10 dargestellten Ausführungsvariante gelingt es, die Rastorgane 10, 20 einstückig durch spanlose Formgebung an den jeweiligen Enden der Boden- und Seitenwandelemente 1, 2 anzuformen. Gleichzeitig kann, sofern erforderlich, die Befestigung des Deckels 4 durch korrespondierend ausgebildete, konventionell gestaltete Rastelemente gestaltet werden.

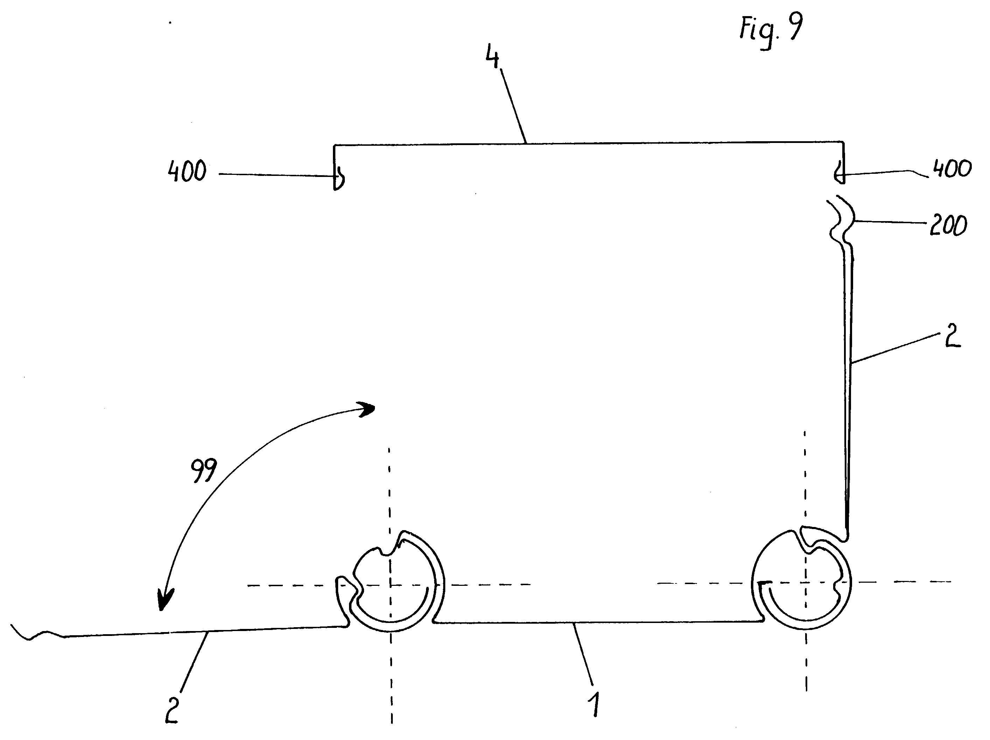

Die Rastorgane 10, 20 sind hierbei schalenförmige konzipiert, wobei verschiedene, am Umfang eingebrachte Sicken und Falze die Verrastung ermöglichen. Durch die federnd nachgiebige Charakterisitik der Rastorgane 10, 20 lassen sich die einzelnen Elemente leicht miteinander verbinden und in der gewünschten Lage fixieren, wie beispielsweise in den Fig. 8 und 9 zu erkennen ist.

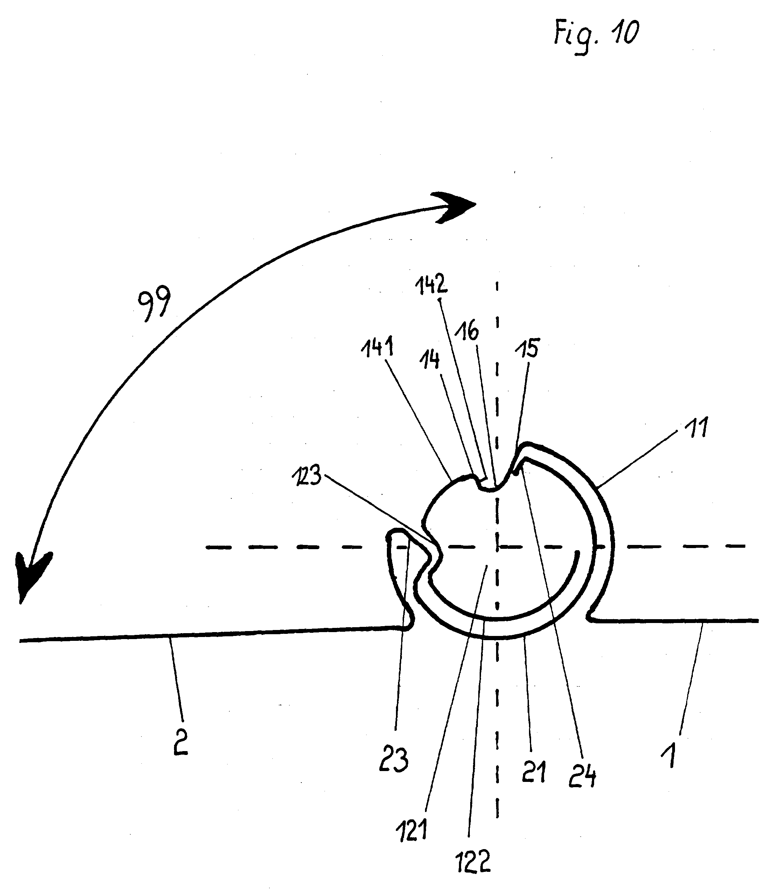

Fig. 10 zeigt in vergrößerter Darstellung das Beispiel einer konkreten Formgebung der Rastorgane 10, 11. Am Bodenelement 1 ist ein erster Profilabschnitt als Lagerschale 11 gestaltet. Dieser geht in einen Abschnitt über, der eine Rastnut 16 darstellt, deren Flanken ein Widerlager 15 und einen Arretiersteg 142 darstellen. Hieran schließt sich ein weiterer Abschnitt an, der eine Gleitrampe 142 darstellt. Die sich hieran anschließende Sicke bildet einen Begrenzungssteg 123, der den Öffnungswinkel 99 im geöffneten Zustand festlegt. Der restliche Konturabschnitt stellt ein Schalensegment 122 dar, welches primär die Lagerung des Seitenwandelements 2 übernimmt.

Zwischen dem auslaufenden Ende des Schalensegments 122 und dem Anfangsbereich der Lagerschale 11 entsteht ein Überlappungsbereich, durch den ein in etwa halbkreisförmiges Lagersegment 21 des Seitenwandelements 2 hindurchgeführt ist. Das Lagersegment 21 knickt endseitig radial nach innen verlaufend ab, so daß ein Anschlag 24 entsteht. Im geöffneten Zustand liegt der Anschlag 24 innen im Bereich des Widerlagers 15 des Bodenelements 1 an. Im geschlossenen Zustand begrenzt er den Schwenkbereich 99 durch stirnseitiges Anliegen am Ende des Schalensegments 122.

Das Lagersegment 21 geht in einen Falz über, der den Arretierschenkel 23 darstellt. Dieser ist zum klemmenden Eingriff in die Rastnut 16 bestimmt. Gleichzeitig begrenzt er durch den Eingriff in die den Begrenzungssteg 123 bildende Sicke den Schwenkbereich 99 im geöffneten Zustand und stützt damit zusammen mit dem Anschlag 24 das Seitenwandelement 2 ab. Dem den Arretierschenkel 23 darstellenden Abschnitt schließt sich ein Übergangsstück an, welches in die Seitenwand übergeht.

Hieraus ergibt sich, daß auf einfache Art und Weise Elemente durch spanlose Formgebung von Blech herstellbar sind.

Dies ermöglicht die freie Gestaltung unterschiedlichster Designvarianten, auch ist beispielsweise durch Lackierung jeder gewünschte Farbeffekt zu erzielen.

Schließlich lassen sich von der strengen U-Form abweichende Kanalquerschnitte durch eine vom geraden Konturverlauf abweichenden Ausrichtung der Seitenwandelemente 2 erzielen.

Die Erfindung ist nicht auf die dargestellten bevorzugten Ausführungsformen beschränkt. Insbesondere kann auch die Zuordnung der Rastorgane 10, 20 zu Bodenelement 1 und Seitenwandelement 2 vertauscht sein. Auch können zusätzliche Rastorgane an anderen Stellen vorgesehen sein, so z. B. am Deckel, wenn dort ein weiteres Kabelkanalprofil anzubringen ist.

## Patentansprüche

1. Kabelkanalprofil mit einem U-förmigen Grundkörper und einem den Grundkörper verschließenden Deckel, dessen Grundkörper aus einem Bodenelement (1) und zwei Seitenwandelementen (2) besteht, und das Bodenelement, die beiden Seitenwandelemente sowie der Deckel (4) Rastorgane aufweisen, welche die das Kabelkanalprofil bildenden Teile lösbar miteinander verbinden, dadurch gekennzeichnet, daß zumindest die Rastorgane (10) des Bodenelements jeweils zumindest einen Lagerzapfen (12; 122), der über einen Trägersteg (13) mit einer Lagerschale (11) derart verbunden ist, daß ein Zwischenraum in Form zumindest eines Hohlzylindersegments entsteht, sowie eine Rastnase (14) aufweisen, und die zugeordneten Rastorgane (20) der Seitenwandelemente (2) hierauf abgestimmt jeweils zumindest ein Lagersegment (21) in Form eines Hohlzylindersegments sowie einen Rasthaken (22) mit einem Arretierschenkel (23) besitzen, derart, daß die zu verbindenden Elemente (1, 2) von den Rastorganen (10, 20) lose und unverlierbar, jedoch lösbar zusammengehalten werden und einen vorbestimmten Schwenkbereich (99) überstreichen können sowie in einer vorgegebenen Endposition des Schwenkbereichs (99) verrastet und miteinander verspannt werden.

2. Kabelkanalprofil nach Anspruch 1, dadurch gekennzeichnet, daß außen an der Lagerschale (11) in der Nähe der Rastnase (14) ein Widerlagersteg (15) für den Arretierschenkel (23) vorhanden ist.

3. Kabelkanalprofil nach Anspruch 2, dadurch gekennzeichnet, daß zwischen dem Widerlagersteg (15) und der Rastnase (14) eine Rastnut (16) vorgesehen ist, welche zur umschließenden Aufnahme des Arretierschenkels (23) dient.

4. Kabelkanalprofil nach einem der Ansprüche 1 bis 3, dadurch gekennzeichnet, daß Seitenflächen (131, 132) des Trägerstegs (13) als Anschlagflächen für radiale Begrenzungsflächen (211, 212) des Lagersegments (21) ausgebildet sind und hierdurch der Schwenkbereich (99) der Elemente (1, 2) definiert ist.

5. Kabelkanalprofil nach einem der vorstehenden Ansprüche, dadurch gekennzeichnet, daß der Lagerzapfen (12) einen Hohlraum (121) nach Art einer zentralen Bohrung aufweist.

6. Kabelkanalprofil nach Anspruch 5, dadurch gekennzeichnet, daß der Lagerzapfen (12)im wesentlichen aus einem Schalensegment (122) gebildet ist.

7. Kabelkanalprofil nach einem der vorstehenden Ansprüche, dadurch gekennzeichnet, daß eines der beiden Seitenwandelemente (2) deckelseitig ein weiteres Rastorgan (20) und der Deckel (4) ein darauf abgestimmtes Rastorgan (10) aufweisen.

8. Kabelkanalprofil nach einem der vorstehenden Ansprüche, dadurch gekennzeichnet, daß zumindest eines der Seitenwandelemente (3) ein zusätzliches Rastorgan (20) zur Anbringung eines weiteren Bodenelements (1) aufweist.

9. Kabelkanalprofil nach einem der vorstehenden Ansprüche, dadurch gekennzeichnet, daß die Rastorgane (10) den Seitenwandelementen (2) und die Rastorgane (20) dem Bodenelement (1) und gegebenenfalls dem Deckel (4) zugeordnet sind.

10. Kabelkanalprofil nach einem der vorstehenden Ansprüche, dadurch gekennzeichnet, daß sämtliche Elemente (1, 2, 3, 4) einschließlich der Rastorgane (10, 20, 200, 400) als Spritzgießteile gefertigt sind.

11. Kabelkanalprofil nach einem der Ansprüche 1 bis 9, dadurch gekennzeichnet, daß sämtliche Elemente (1, 2, 3, 4) einschließlich der Rastelemente (10, 20, 200, 400) aus einem tafel- oder bandförmigen Metallhalbzeug, insbesondere aus Stahlblech, durch spanlose Formgebung hergestellt sind.

## Claims

1. Cable ducting section having a U-shaped main body and a lid which closes the main body, whose main body comprises a base element (1) and two side-wall elements (2), and the base element, the two side-wall elements and the lid (4) having latching devices which detachably join together the parts forming the cable ducting section, characterized in that at least the latching devices (10) of the base element each have at least one bearing lug (12; 122), which is joined via a supporting web (13) to a bearing shell (11) in such a way that a cavity is produced in the form of at least one hollow cylindrical segment, and a latch protrusion (14), and the associated latching devices (20) of the side-wall elements (2) matched thereto each have at least one bearing segment (21) in the form of a hollow cylindrical segment and also a latch hook (22) with a stop limb (23), whereby the elements (1, 2) to be joined of the latching devices (10, 20) can be held together in a loose and trapped, but detachable manner and can traverse a predetermined swivelling range (99) and are latched in a fixed limit position of the swivelling range (99) and are clamped together.

2. Cable ducting section according to Claim 1, characterized in that an abutting web (15) for the stop limb (23) is present on the outside of the bearing shell (11) in the vicinity of the latch protrusion (14).

3. Cable ducting section according to Claim 2, characterized in that a latch groove (16) which serves to receive the stop limb (23) in an enclosing manner is provided between the abutting web (15) and the latch protrusion (14).

4. Cable ducting section according to one of Claims 1 to 3, characterized in that side faces (131, 132) of the supporting web (13) are formed as stop faces for radial boundary faces (211, 212) of the bearing segment (21) and the swivelling range (99) of the elements (1, 2) is thereby defined.

5. Cable ducting section according to one of the preceding claims, characterized in that the bearing lug (12) has a hollow cavity (121) in the manner of a central bore.

6. Cable ducting section according to Claim 5, characterized in that the bearing lug (12) is formed essentially from a shell segment (122).

7. Cable ducting section according to one of the preceding claims, characterized in that one of the two side-wall elements (2) has, on the lid side, a further latching device (20) and the lid (4) has a latching device (10) matched thereto.

8. Cable ducting section according to one of the preceding claims, characterized in that at least one of the side-wall elements (3) has an additional latching device (20) for attaching a further base element (1).

9. Cable ducting section according to one of the preceding claims, characterized in that the latching devices (10) of the side-wall elements (2) and the latching devices (20) of the base element (1) and optionally the lid (4) are associated.

10. Cable ducting section according to one of the preceding claims, characterized in that all the elements (1, 2, 3, 4), including the latching devices (10, 20, 200, 400) are manufactured as injection-moulded parts.

11. Cable ducting section according to one of Claims 1 to 9, characterized in that all the elements (1, 2, 3, 4), including the latching elements (10, 20, 200, 400) are produced from a slab-type or strip-type semifinished metal product, in particular from steel sheet, by non-cutting shaping.

## Revendications

1. Profilé de chemin de câble comportant un corps de base à section en forme de U et un couvercle fermant le corps de base, le corps de base se composant d'un élément de fond (1) et de deux éléments de paroi latérale (2) et l'élément de fond, les deux éléments de paroi latérale ainsi que le couvercle (4) comportant des organes d'accrochage reliant de manière amovible les pièces formant le profilé de chemin de câble, caractérisé en ce qu'au moins les organes d'accrochage (10) de l'élément de fond sont reliés chaque fois par au moins un tourillon de palier (12 ; 122) lui-même relié par une branche de support (13) à une coquille de palier (11) de manière à laisser un volume intermédiaire au moins en forme de segment de cylindre creux, et ayant un bec d'accrochage (14), et en ce que les organes d'accrochage associés (20) des éléments de paroi latérale (2) sont accordés chaque fois à au moins un segment de palier (21) en forme de segment de cylindre creux et possédant un crochet (22) avec une branche d'accrochage (23) de manière que les éléments (1, 2) à réunir par les organes d'accrochage (10, 20) librement et de manière imperdable, soient néanmoins réunis de manière amovible et puissent balayer une plage de pivotement (99) prédéterminée et s'accrocher dans une position de fin de course prédéterminée de la plage de pivotement (99) et être serrée entre eux.

2. Profilé de chemin de câble selon la revendication 1, caractérisé en ce qu'à l'extérieur sur la coquille de palier (11), à proximité du bec d'accrochage (14) il y a un bord formant appui (15) pour la branche de blocage (23).

3. Profilé de chemin de câble selon la revendication 2, caractérisé en ce qu'entre le bord formant appui (15) et le bec d'accrochage (14) il y a une rainure d'accrochage (16) servant à recevoir la branche de blocage (23) en l'entourant.

4. Profilé de chemin de câble selon l'une des revendications 1 à 3, caractérisé en ce que les surfaces latérales (131, 132) de la branche de support (13) sont réalisées comme surfaces de butée pour les surfaces de limitation radiale (211, 212) du segment de palier (21) et définissent ainsi la plage de pivotement (99) des éléments (1, 2).

5. Profilé de chemin. de câble selon l'une des revendications précédentes, caractérisé en ce que le tourillon de palier (12) comporte une cavité (121) en forme de perçage central.

6. Profilé de chemin de câble selon la revendication 5, caractérisé en ce que le tourillon de palier (12) est essentiellement formé par un segment de coquille (122).

7. Profilé de chemin de câble selon l'une des revendications précédentes, caractérisé en ce que l'un des deux éléments de paroi latérale (2) comporte du côté du couvercle, un autre organe d'accrochage (20) et le couvercle (4) comporte un organe d'accrochage (10) correspondant.

8. Profilé de chemin de câble selon l'une des revendications précédentes, caractérisé en ce qu'au moins l'un des éléments de paroi latérale (3) comporte un organe d'accrochage (20) supplémentaire pour recevoir un autre élément de fond (1).

9. Profilé de chemin de câble selon l'une des revendications précédentes, caractérisé en ce que les organes d'accrochage (10) sont associés aux éléments de paroi latérale (2) et les organes d'accrochage (20) sont associés à l'élément de fond (1) et le cas échéant au couvercle (4).

10. Profilé de chemin de câble selon l'une des revendications précédentes, caractérisé en ce que tous les éléments (1, 2, 3, 4) y compris les organes d'accrochage (10, 20, 200, 400) sont des pièces injectées.

11. Profilé de chemin de câble selon l'une des revendications 1 à 9, caractérisé en ce tous les éléments (1, 2, 3, 4) y compris les éléments d'accrochage (10, 20, 200, 400) sont réalisés par une mise en forme sans usinage avec enlèvement de copeaux à partir d'un produit métallique semi-fini en forme de plaque ou de ruban, notamment en tôle d'acier.
